# EUROPÄISCHE PATENTSCHRIFT

(11) **EP 1 158 648 B1**
(45) Veröffentlichungstag und Bekanntmachung des Hinweises auf die Patenterteilung: **03.07.2019**
(21) Anmeldenummer: 01810369.7
(22) Anmeldetag: 12.04.2001
(51) Int. Cl.: H02K 7/09, F16C 39/06, F16C 32/04

(54) **Elektromagnetischer Drehantrieb**
Electromagnetic rotary drive
Entrainement de rotation électromagnetique

(30) Priorität: 12.05.2000 EP 00810407
(43) Veröffentlichungstag der Anmeldung: 28.11.2001
(73) Patentinhaber: Levitronix LLC, Waltham, MA 02451 (US)
(72) Erfinder: Schöb, Reto, Dr., 8604 Volketswil (CH)
(74) Vertreter: Intellectual Property Services GmbH

(56) Entgegenhaltungen:
- EP-A- 0 566 806
- EP-A- 0 768 750
- EP-A- 0 939 480
- US-A- 5 424 595
- US-A- 6 053 705

## Beschreibung

Die Erfindung betrifft einen elektromagnetischen Drehantrieb gemäss dem Oberbegriff des unabhängigen Anspruchs, wobei der Drehantrieb als lagerloser Motor ausgestaltet ist.

Der sogenannte lagerlose Motor ist ein elektromagnetischer Drehantrieb, bei welchem der Rotor mittels magnetischer Kräfte berührungslos bezüglich des Stators gelagert ist, wobei keine separaten Magnetlager für den Rotor vorhanden sind. Im aktiven Motorteil wird nicht nur ein Drehmoment sondern zusätzlich eine magnetische Lagerkraft erzeugt. Der Stator ist dazu als Lager- und Antriebsstator ausgestaltet, der eine Antriebswicklung zum Erzeugen einen Antriebsfelds und eine Steuerwicklung zum Erzeugen eines Steuerfelds umfasst. Mit der Antriebs- und der Steuerwicklung lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist.

In diesem Sinne ist für die folgenden Ausführungen der Begriff "lagerloser Motor" zu verstehen. Bezüglich weiterer Details der Ausgestaltung, der Anwendungen und speziell der Ansteuerung bzw. Regelung des lagerlosen Motors sei hier auf die WO-A-96/31934 und auf die WO-95/18925 verwiesen.

Der Erfindung liegt die Aufgabe zugrunde, einen elektromagnetischen Drehantrieb vorzuschlagen, der als lagerloser Motor ausgestaltet ist, bei dem sowohl das Antriebsfeld als auch das Steuerfeld in Form eines magnetischen Drehfelds erzeugbar sind und der einfacher ist, insbesondere hinsichtlich seines Aufbaus, als die bekannten Ausführungsformen.

Der diese Aufgabe lösende elektromagnetische Drehantrieb ist durch die Merkmale des unabhängigen Anspruchs gekennzeichnet.

Erfindungsgemäss wird also ein elektromagnetischer Drehantrieb vorgeschlagen, ausgestaltet als lagerloser Motor, mit einem magnetisch gelagerten Rotor und einem Stator, der eine Antriebswicklung zum Erzeugen eines magnetischen Antriebsdrehfelds umfasst, welches ein Drehmoment auf den Rotor bewirkt, und eine Steuerwicklung zum Erzeugen eines magnetischen Steuerdrehfelds, mit welchem die Position des Rotors bezüglich des Stators regelbar ist, wobei der Stator genau sechs Statorzähne aufweist.

Wesentlich für die Erfindung ist dabei die Erkenntnis, dass sich ein nach dem Prinzip des lagerlosen Motors ausgestalteter Drehantrieb, bei welchem sowohl das Antriebsfeld als auch das Steuerfeld in Form von Drehfelden generierbar sind, mit nur sechs Statorzähnen realisieren lässt. Bisher war es Stand der Technik, dass die minimale Anzahl der Statorzähne für einen solchen lagerlosen Motor acht beträgt. Dies hat folgenden Grund: Gemäss dem Prinzip des lagerlosen Motors müssen sich die Polpaarzahlen der Antriebswicklung und der Steuerwicklung um eins unterscheiden, das heisst im Minimalfall ist eine der Wicklungen zweipolig und die andere Wicklung vierpolig. Damit mit jeder Wicklung ein Drehfeld erzeugbar ist, muss jede Wicklung mindestens zweiphasig ausgestaltet sein. Gemäss dem bekannten Stand der Technik ergibt sich die minimale Anzahl der Statorzähne aus dem Produkt der doppelten Polpaarzahl und der Phasenanzahl, und ist folglich gleich acht.

Durch die Erfindung wird nun vorgeschlagen, einen solchen Drehantrieb mit nur sechs Statorzähnen zu realisieren. Dies bringt eine erhebliche Vereinfachung des gesamten Drehantriebs mit sich. So vereinfacht sich beispielsweise der Aufbau des Stators bzw. des Rotors und der Aufbau der Wicklungen bzw. der Spulen, mit denen die Wicklungen realisiert werden.

Gemäss einem ersten Ausführungsbeispiel sind die Antriebswicklung und die Steuerwicklung als separate, das heisst körperlich verschiedene Wicklungen ausgestaltet. Die Antriebswicklung und die Steuerwicklung umfassen jeweils sechs konzentrierte Spulen, wobei um jeden Statorzahn eine Spule der Antriebswicklung und eine Spule der Steuerwicklung gewickelt ist. Bei diesem Ausführungsbeispiel sind die Antriebswicklung und die Steuerwicklung jeweils dreiphasig ausgestaltet, was den Vorteil hat, dass sie jeweils mit einem konventionellen Drehstromsteller betrieben werden können.

Bei einem zweiten Ausführungsbeispiel sind die Antriebswicklung und die Steuerwicklung mit denselben Spulen realisiert. Dabei ist auf jedem Statorzahn genau eine Spule vorgesehen. Jede Spule ist separat und unabhängig von den anderen Spulen ansteuerbar. Diese sechs Spulen fungieren sowohl als Antriebswicklung als auch als Steuerwicklung. Die für die Erzeugung des Steuerdrehfelds und des Antriebsdrehfelds benötigten Ströme werden für jede Spule berechnet, dann rechnerisch überlagert und in die entsprechende Spule eingespeist.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen:
- Fig. 1:: ein erstes Ausführungsbeispiel des erfindungsgemässen Drehantriebs,
- Fig. 2:: den Stator und den Rotor des ersten Ausführungsbeispiels, wobei nur die Wicklung mit der Polpaarzahl zwei dargestellt ist,
- Fig. 3:: den Stator und den Rotor des ersten Ausführungsbeispiels, wobei nur die Wicklung mit der Polpaarzahl eins dargestellt ist, und
- Fig. 4:: ein zweites Ausführungsbeispiel des erfindungsgemässen Drehantriebs.

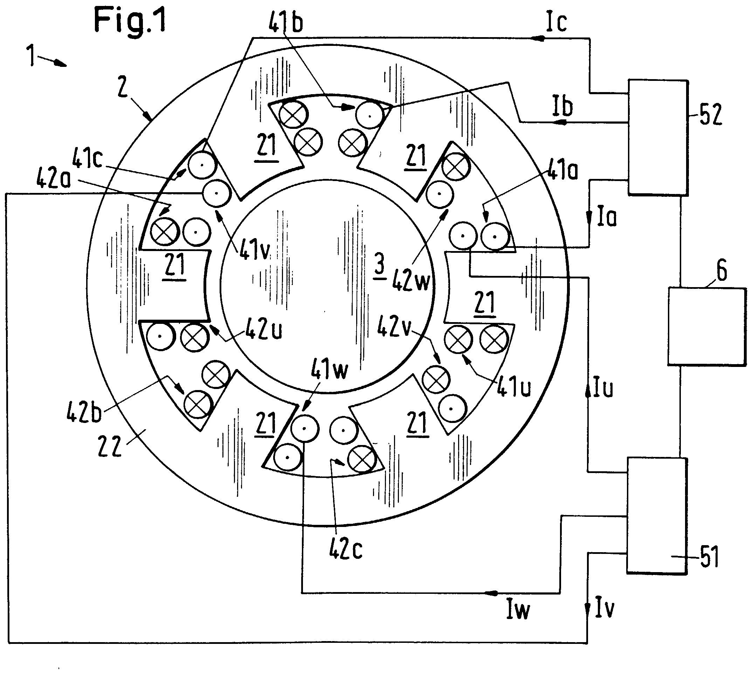

Fig. 1 zeigt in einer schematischen Darstellung ein erstes Ausführungsbeispiel des erfindungsgemässen elektromagnetischen Drehantriebs, der gesamthaft mit dem Bezugszeichen 1 versehen ist. Der Drehantrieb 1 umfasst einen Stator 2 und einen magnetisch gelagerten Rotor 3, der von dem Stator 2 umgeben wird.

Gemäss dem Prinzip des lagerlosen Motors umfasst der Stator 2, der als Lager- und Antriebsstator ausgebildet ist, eine Antriebswicklung zum Erzeugen eines magnetischen Antriebsdrehfelds, welches ein Drehmoment auf den Rotor 3 bewirkt und diesen antreibt, sowie eine Steuerwicklung zum Erzeugen eines magnetischen Steuerdrehfelds, mit welchem die radiale Position des Rotors 3 regelbar ist, wobei sich die Polpaarzahlen der beiden Wicklungen um eins unterscheiden. Durch die Kombination der beiden magnetischen Drehfelder kann der Rotor 3 angetrieben und magnetisch berührungslos im Stator 2 gelagert werden.

Wie weiter hinten noch erläutert, weist eine der beiden Wicklungen, hier die Antriebswicklung, eine Polpaarzahl eins auf, das heisst sie ist zweipolig, und die andere Wicklung, hier die Steuerwicklung, weist eine Polpaarzahl zwei auf, das heisst sie ist vierpolig.

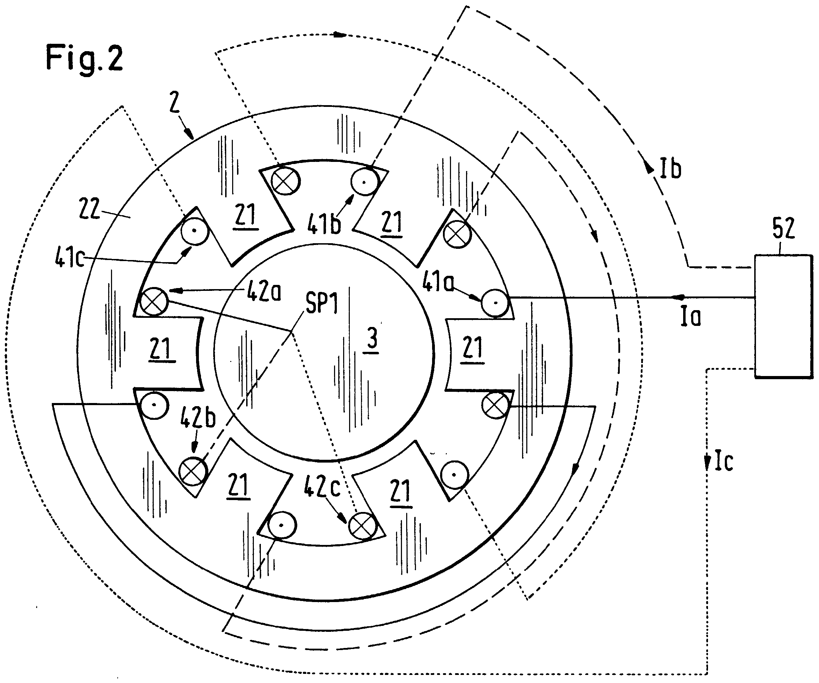

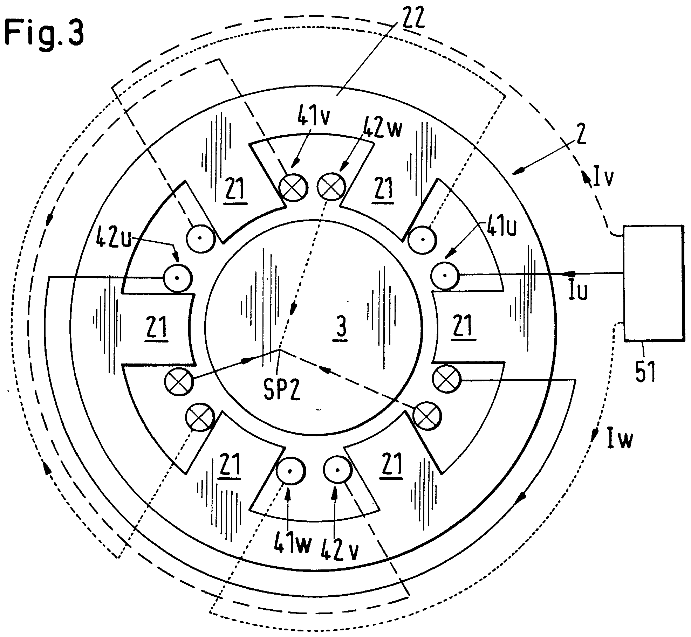

Erfindungsgemäss umfasst der Stator 2 genau sechs Statorzähne 21. Die Statorzähne 21 sind mittels eines Rückschlusses 22, üblicherweise ein Eisenrückschluss, magnetisch miteinader gekoppelt. Die Antriebswicklung und die Steuerwicklung sind jeweils durch mehrere konzentrierten Spulen realisiert, welche um die Statorzähne 21 gewickelt sind. In Fig.1 sind sämtliche Spulen 41u, 42u, 41v, 42v, 41w, 42w, 41a, 42a, 41b, 42b, 41c, 42c eingezeichnet, wobei die Verschaltung der Spulen aus Gründen der Übersichtlichkeit nicht näher dargestellt ist. Zum besseren Verständnis zeigen Fig. 2 und Fig. 3 den Stator 2 und den Rotor 3 des ersten Ausführungsbeispiels, wobei in Fig. 2 nur die Spulen der vierpoligen Wicklung (hier die Steuerwicklung) symbolisch dargestellt sind und in Fig. 3 nur die Spulen der zweipoligen Wicklung (hier die Antriebswicklung). Der Wicklungssinn der einzelnen Spulen ist konventionsgemäss durch die beiden Symbole ⊙ und ⊗ veranschaulicht, wobei ⊙ bedeutet, dass ein positiver Strom nach vorne aus der Zeichenebene herausfliesst und ⊗, dass ein positiver Strom nach hinten aus der Zeichenebene herausfliesst.

Die Steuerwicklung (siehe Fig. 2), die hier als vierpolige Wicklung (Polpaarzahl zwei) ausgestaltet ist, umfasst die sechs konzentrierten Spulen 41a, 42a, 41b, 42b, 41c, 42c. Auf jedem Statorzahn 21 ist eine der konzentrierten Spulen 41a, 42a, 41b, 42b, 41c, 42c vorgesehen. Die Steuerwicklung ist dreiphasig ausgelegt, das heisst sie umfasst drei Wicklungsstränge bzw. Phasen, die von Phasenströmen Ia, Ib und Ic durchflossen werden. Die Spulen 41a, 42a, 41b,42b, 41c, 42c der Steuerwicklung sind paarweise elektrisch in Serie verbunden, wobei jeweils diejenigen Spulen 41a, 42a bzw. 41b,42b bzw. 41c, 42c paarweise verbunden sind, die um diametral gegenüberliegende Statorzähne 21 gewickelt sind. Die seriell verbundenen Spulen 41a, 42a bilden den ersten Wicklungsstrang der Steuerwicklung, gehören also zur ersten Phase und werden vom Phasenstrom Ia (dargestellt mit durchgezogener Linie) durchflossen. Analog umfasst der zweite Wicklungsstrang, der vom Phasenstrom Ib (gestrichelt dargestellt) durchflossen wird, bzw. die zweite Phase die Spulen 41b, 42b und der dritte Wicklungsstrang (Phasenstrom Ic, gepunktet dargestellt) bzw. die dritte Phase die beiden Spulen 41c und 42c.

Wie dies Fig. 2 zeigt, sind die paarweise verbundenen Spulen 41a, 42a bzw. 41b,42b bzw. 41c, 42c der Steuerwicklung stets gegensinnig zueinander gewickelt, das heisst, die Spule 41a ist im umgekehrten Sinn gewickelt wie die Spule 42b. Gleiches gilt für das Spulenpaar 41b, 42b und für das Spulenpaar 41c, 42c.

Die drei elektrischen Phasen der Steuerwicklung sind bei diesem Ausführungsbeispiel in einer Sternpunkschaltung verschaltet, das heisst die drei Phasenströme Ia, Ib, Ic fliessen in einem gemeinsamen Sternpunkt SP1 zusammen.

Natürlich sind auch solche Ausgestaltungen möglich, bei denen die drei Phasen der Steuerwicklung in einer Dreieckschaltung verschaltet sind.

Die Antriebswicklung (siehe Fig. 3), die hier als zweipolige Wicklung (Polpaarzahl 1) ausgestaltet ist, umfasst die sechs konzentrierten Spulen 41 u, 42u, 41 v, 42v, 41w, 42w. Auf jedem Statorzahn 21 ist eine der konzentrierten Spulen 41u, 42u, 41v, 42v, 41w, 42w vorgesehen. Die Antriebswicklung ist bei dem ersten Ausführungsbeispiel also als separate Wicklung ausgestaltet, das heisst mit anderen Spulen realisiert als die Steuerwicklung. Die Antriebswicklung ist dreiphasig ausgelegt, das heisst sie umfasst drei Wicklungsstränge bzw. Phasen, die von Phasenströmen Iu, Iv und Iw durchflossen werden. Die Spulen 41u, 42u, 41v,42v, 41w, 42w der Antriebswicklung sind paarweise elektrisch in Serie verbunden, wobei jeweils diejenigen Spulen 41u, 42u bzw. 41v,42v bzw. 41w, 42w paarweise verbunden sind, die um diametral gegenüberliegende Statorzähne 21 gewickelt sind. Die seriell verbundenen Spulen 41u, 42u bilden den ersten Wicklungsstrang der Antriebswicklung, gehören also zur ersten Phase und werden vom Phasenstrom Iu (dargestellt mit durchgezogener Linie) durchflossen. Analog umfasst der zweite Wicklungsstrang, der vom Phasenstrom Iv (gestrichelt dargestellt) durchflossen wird, bzw. die zweite Phase die Spulen 41v, 42v und der dritte Wicklungsstrang (Phasenstrom Iw, gepunktet dargestellt) bzw. die dritte Phase die beiden Spulen 41w und 42w.

Wie dies Fig. 3 zeigt, sind die paarweise verbundenen Spulen 41u, 42u bzw. 41v,42v bzw. 41w, 42w der Antriebswicklung stets gleichsinnig zueinander gewickelt, das heisst, die Spule 41u ist im gleichen Sinn gewickelt wie die Spule 42u. Gleiches gilt für das Spulenpaar 41v, 42v und für das Spulenpaar 41w, 42w.

Die drei elektrischen Phasen der Antriebswicklung sind bei diesem Ausführungsbeispiel in einer Sternpunkschaltung verschaltet, das heisst die drei Phasenströme Iu, Iv,Iw fliessen in einem gemeinsamen Sternpunkt SP2 zusammen.

Natürlich sind auch solche Ausgestaltungen möglich, bei denen die drei Phasen der Antriebswicklung in einer Dreieckschaltung verschaltet sind.

Es versteht sich, dass die paarweise zusammengeschalteten Spulen der Steuerwicklung und/oder der Antriebswicklung auch elektrisch parallel geschaltet sein können.

Zur Stromversorgung der Antriebswicklung und der Steuerwicklung ist jeweils eine Stelleinrichtung 51 bzw. 52 vorgesehen, welche die Phasenströme Iu,Iv,Iw bzw. Ia, Ib, Ic in den jeweiligen Wicklungsstrang einspeist.

Da bei dem ersten Ausführungsbeispiel sowohl die Antriebswicklung als auch die Steuerwicklung dreiphasig ausgestaltet ist und die einzelnen Phasen jeweils in Sternpunkt- oder in Dreieckschaltung betrieben werden, kann als Stelleinrichtung 51 für die Antriebswicklung und als Stelleinrichtung 52 für die Steuerwicklung jeweils ein konventioneller und damit kostengünstiger Drehstromsteller verwendet werden.

Ein solcher Drehstromsteller stellt drei Phasenströme Ia,Ib,Ic bzw. Iu,Iv,Iw bereit, wobei die drei Phasenströme zueinander jeweils eine Phasenverschiebung von 120° aufweisen.

Natürlich können die Stelleinrichtungen 51 und 52 auch andere Vorrichtungen mit Leistungsverstärkern sein, beispielsweise mehrphasige Stromsteller mit Brückenzweigen, H-Brücken-Schaltverstärker, andere Formen von Schaltverstärkern oder Analogverstärker. Ferner ist es möglich, die Stelleinrichtungen 51 und 52 als Spannungssteller auszugestalten, sodass eine Spannungseinprägung in die einzelnen Wicklungsstränge erfolgt.

Die Stelleinrichtungen 51 und 52 werden von einer Kontrollvorrichtung 6 (Fig. 1) angesteuert. Diese enthält die Auswerte- und Regeleinheiten für den Betrieb des Drehantriebs 1. In der Kontrollvorrichtung 6 werden mittels Ist-Sollwert-Vergleich für z. B. die Rotorlage, die Drehzahl, das Drehmoment oder den Rotorwinkel die jeweils benötigten Phasenströme Ia,Ib,Ic bzw. Iu,Iv,Iw berechnet. Die Stelleinrichtungen 51, 52 werden dann so angesteuert, dass sie diese Phasenströme in die entsprechenden Wicklungsstänge der Antriebs- oder der Steuerwicklung einprägen. Die für den Antrieb und die Lageregelung des als lagerloser Motor ausgestalteten Drehantriebs 1 üblicherweise vorgesehene Sensorik, wie beispielsweise Positionssensoren oder Feldsensoren zur Bestimmung des Rotorwinkels, sowie die Regelstrukturen für den lagerlosen Motor sind an sich hinlänglich bekannt und daher in der Zeichnung nicht dargestellt. Einige mögliche Regelstrukturen für den lagerlosen Motor werden beispielsweise in der WO-A-95/18925 beschrieben. Daher wird hier auf die Ausgestaltung der Regelung und die Sensorik nicht mehr eingegangen.

Im Folgenden wird nun beschrieben, wie im Betrieb des Drehantriebs das zweipolige Antriebsdrehfeld und das vierpolige Steuerdrehfeld generiert wird.

Für das Steuerdrehfeld (siehe Fig. 2) werden die Betrachtungen zunächst auf eine Phase, beispielsweise die vom Phasenstrom Ia beaufschlagte erste Phase mit den Spulen 41a, 42a beschränkt. Wird ohne Beschränkung der Allgemeinheit beispielsweise angenommen, dass der Phasenstrom Ia gerade sein positives Maximum hat, so ist der von der Spule 41a umschlossene Statorzahn 21 ein magnetischer Nordpol. Da die zweite Spule 42a der ersten Phase gegensinnig zur Spule 41a gewickelt ist, stellt auch der von der Spule 42a umschlossene Statorzahn 21 einen magnetischen Nordpol dar. Aufgrund des magnetischen Flusses, der von diesen beiden Nordpolen über den Luftspalt auf den Rotor 3 fliesst und von dort über die vier anderen Statorzähne 21, nämlich diejenigen, die von den Spulen 41b, 42b, 41c, 42c der zweiten und dritten Phase umschlossen werden, rückgeführt wird, verhalten sich diese vier Statorzähne 21 südpolartig. An diesen Statorzähnen 21 prägen sich magnetische Südpole aus, die jeweils betragsmässig schwächer sind als die Nordpole. Durch den Phasenstrom Ia werden also an den diametral gegenüberliegenden Statorzähnen 21, welche die Spulen 41a und 42a tragen, zwei Nordpole generiert und an den dazwischenliegenden vier Statorzähnen 21 abgeschwächte Südpole. Folglich existieren über den gesamten Umfang des Rotors gesehen insgesamt vier Polwechsel, das heisst das generierte magnetische Feld ist vierpolig (Polpaarzahl zwei).

Analoge Betrachtungen gelten für die beiden anderen Phasen, deren Phasenströme Ib,Ic bezüglich der ersten Phase um 120° bzw. um 240° phasenverschoben sind. Folglich ist das mit der Steuerwicklung generierte Steuerdrehfeld ein magnetisches Drehfeld der Polpaarzahl zwei. Die Steuerwicklung ist also vierpolig.

Im Folgenden wird nun erläutert, dass die Antriebswicklung (siehe Fig. 3) zweipolig (Polpaarzahl 1) ist. Es sei ohne Beschränkung der Allgemeinheit angenommen, dass zu einem gegebenen Zeitpunkt der Phasenstrom Iu der ersten Phase sein positives Maximum hat. Dieses Maximum wird willkürlich mit dem Phasenwinkel 0° bezeichnet, also als Nullpunkt für den Phasenwinkel gewählt. Ferner sei der Einfachheit halber angenommen, dass alle drei Phasenströme Iu, Iv, Iw die gleiche Amplitude haben.

Das positive Maximum des Phasenstroms Iu bewirkt, dass der von der Spule 41u umschlossene Statorzahn 21 ein magnetischer Nordpol ist. Da die diametral gegenüberliegende zweite Spule 42u der ersten Phase gleichsinnig gewickelt ist wie die mit ihr seriell verbundene erste Spule 41u, ist der von der zweiten Spule 42u umschlossene Statorzahn 21 ein magnetischer Südpol (Phasenlage 180°).

Der Phasenstrom Iv der zweiten Phase ist gegenüber dem Phasenstrom Iu der ersten Phase um 120° phasenverschoben, das heisst zum betrachteten Zeitpunkt hat der die Spule 41v durchfliessende Phasenstrom Iv die Phasenlage 120° und der die Spule 42v durchfliessende Phasenstrom die Phasenlage 300°. Folglich bildet sich an dem von der Spule 41v umgebenen Statorzahn 21 ein magnetischer Südpol, der betragsmässig halb so stark ist wie der Nord- bzw. Südpol, der von der ersten Phase generiert wird. Analog ist der von der Spule 42v der zweiten Phase umgebene Statorzahn 21 ein magnetischer Nordpol halber Stärke.

Der Phasenstrom Iw der dritten Phase ist gegenüber dem Phasenstrom Iu der ersten Phase um 240° phasenverschoben, das heisst zum betrachteten Zeitpunkt hat der die Spule 41w durchfliessende Phasenstrom Iw die Phasenlage 240° und der die Spule 42w durchfliessende Phasenstrom die Phasenlage 420° bzw 60°. Folglich bildet sich an dem von der Spule 41w umgebenen Statorzahn 21 ein magnetischer Nordpol, der betragsmässig halb so stark ist wie der Nord- bzw. Südpol, der von der ersten Phase generiert wird. Analog ist der von der Spule 42w der zweiten Phase umgebene Statorzahn 21 ein magnetischer Südpol halber Stärke.

Betrachtet man nun den Umfang des Rotors 3 im Uhrzeigersinn und beginnend bei der Spule 41u so ergibt sich die magnetische Polfolge N-1/2N-1/2N-S-1/2S-1/2S (wobei N für Nordpol steht und S für Südpol). Es existieren also insgsamt zwei Polwechsel. Folglich ist das mit der Antriebswicklung generierte Antriebsdrehfeld ein magnetisches Drehfeld der Polpaarzahl eins. Die Antriebswicklung ist also zweipolig.

Auf die vorangehend beschriebene Weise lassen sich in dem Stator 2, der genau sechs Statorzähne 21 aufweist, eine Wicklung der Polpaarzahl zwei und eine Wicklung der Polpaarzahl eins realisieren, sodass der Drehantrieb 1 nach dem Prinzip des lagerlosen Motors betrieben werden kann, wobei sowohl das Antriebsfeld als auch das Steuerfeld magnetische Drehfelder sind.

Es sei betont, dass die Steuerwicklung und die Antriebswicklung austauschbar sind, das heisst es ist ebenso gut möglich, die zweipolige Wicklung als Steuerwicklung zu verwenden und die vierpolig Wicklung als Antriebswicklung.

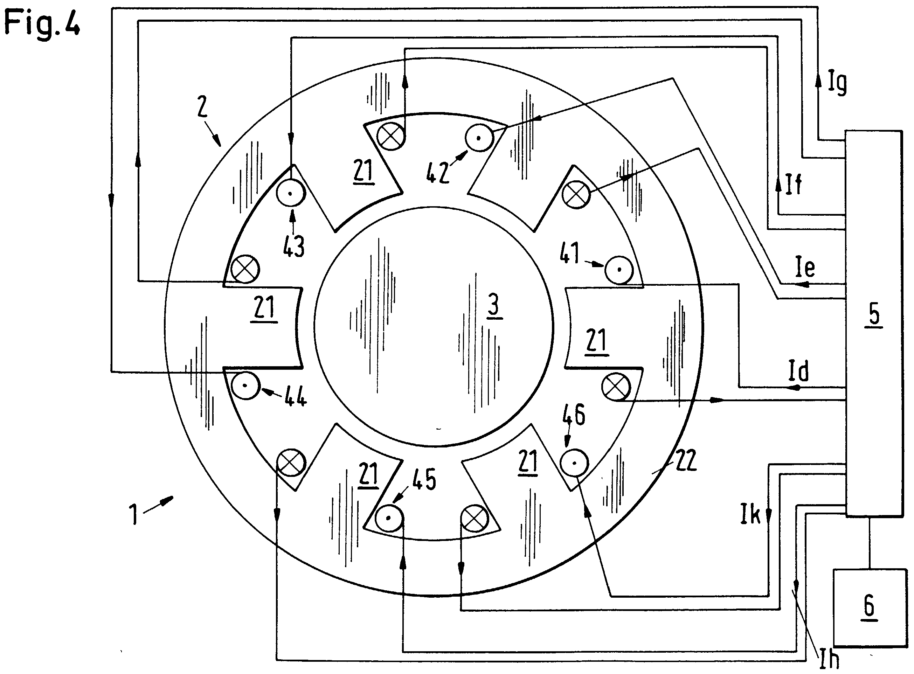

Fig. 4 zeigt ein zweites Ausführungsbeispiel des erfindungsgemässen Drehantriebs 1. Im Folgenden wird nur die Unterschiede zum ersten Ausführungsbeispiel näher eingegangen, ansonsten gelten die Ausführungen bezüglich des ersten Ausführungsbeispiels in sinngemäss gleicher Weise auch für das zweite Ausführungsbeispiel.

Bei dem zweiten Ausführungsbeispiel ist auf jedem Statorzahn 21 genau eine Spule 41,42,43,44,45,46 vorgesehen, das heisst die zwei Spulen, die bei dem ersten Ausführungsbeispiel jeweils um einen Statorzahn gewickelt sind, sind bei dem zweiten Ausführungsbeispiel durch eine Spule ersetzt.

Die sechs konzentrierten Spulen 41-46 dienen sowohl zur Realisierung der Antriebswicklung als auch zur Realisierung der Steuerwicklung. Jede der sechs Spulen 41-46 ist separat und unabhängig von den anderen Spulen ansteuerbar, das heisst die in die Spulen 41-46 eingeprägten Stöme Id, Ie, If, Ig, Ih, Ik sind unabhängig voneinander regelbar bzw. einstellbar. Dazu ist beispielsweise jede der Spulen 41-46 mit ihren jeweils zwei Anschlüssen mit einer Stelleinrichtung 5 verbunden, in welcher für jede Spule 41-46 ein separater bipolarer Leistungsverstärker vorgesehen ist. Natürlich sind auch andere Ausführungsformen möglich, wichtig ist jedoch, dass der Strom für jede Spule 41-46 unabhängig von den Strömen für die anderen Spulen regelbar ist und jeder Strom und jede Spannung positives und negatives Vorzeichen annehmen kann.

Im Betriebszustand ermittelt die Kontrollvorrichtung 6 für jede Spule den Phasenstrom Ia,Ib bzw. Ic, der für die Steuerwicklung benötigt wird, und den Phasenstrom Iu,Iv,Iw, der für die Antriebswicklung benötigt wird, wobei die Bezeichnungen der Ströme die gleiche Bedeutung haben wie beim ersten Ausführungsbeispiel. Für jede Spule 41-46 werden dann der zugehörige Phasenstrom für die Antriebswicklung Iu bzw. Iv bzw. Iw und der zugehörige Phasenstrom für die Steuerwicklung Ia bzw. Ib bzw. Ic unter Beachtung des Vorzeichens überlagert, beispielsweise rechnerisch, woraus sich der resultierende Strom Id bzw. Ie usw. ergibt. Dieser wird dann in die entsprechende Spule eingespeist.

Durch einen Vergleich der Fig. 2, 3 und 4 ergeben sich die folgenden Ströme für die sechs Spulen 41-46:

| | |
|---|---|
| Spule 41: | Id = Ia + Iu |
| Spule 42: | Ie = Ib - Iw |
| Spule 43: | If = Ic + Iv |
| Spule 44: | Ig = Ia - Iu |
| Spule 45: | Ih = Ib + Iw |
| Spule 46: | Ik = Ic - Iv |

Auf diese Weise lässt sich in sinngemäss gleicher Weise wie beim ersten Ausführungsbeispiel eine zweipolige, dreiphasige Drehfeldwicklung und eine vierpolige, dreiphasige Drehfeldwicklung generieren. Auch hier kann entweder die Wicklung mit der Polpaarzahl eins als Antriebswicklung, also zur Erzeugung des Antriebsdrehfelds verwendet werden und die Wicklung mit der Polpaarzahl zwei als Steuerwicklung, also zur Erzeugung des Steuerdrehfelds, oder umgekehrt die Wicklung mit der Polpaarzahl eins als Steuerwicklung und die Wicklung mit der Polpaarzahl zwei als Antriebswicklung.

Ein besonderer Vorteil des zweiten Ausführungsbeispiels ist darin zu sehen, dass der als lagerloser Motor ausgestaltete Drehantrieb 1 auch beim Ausfall von bis zu zwei Spulen oder der sie versorgenden Komponenten der Stelleinrichtung 5 funktionstüchtig bleibt, wodurch eine Fehlertoleranz realisiert wird.

Ein wesentlicher Aspekt des erfindungsgemässen Drehantriebs 1 ist darin zu sehen, dass mit nur sechs Statorzähnen 21 bzw. mit nur sechs Nuten zwischen den Statorzähnen 21 zwei Drehfeldwicklungen realisierbar sind, deren Polpaarzahl sich um eins unterscheidet. Dabei können für die beiden Wicklungen jeweils separate Spulen vorgesehen sein, wie beim ersten Ausführungsbeispiel, oder beide Wicklungen können mit körperlich denselben Spulen realisiert werden.

Der Rotor 3 des erfindungsgemässen Drehantriebs kann prinzipiell frei gewählt werden. Es kann beispielsweise ein permanentmagnetisch erregter Rotor sein, oder ein Kurzschlusskäfigrotor oder ein Reluktanzrotor.

Der Rotor 3 kann beispielsweise ein scheiben- oder ringförmiger Rotor sein oder auch eine Welle, mit der beispielsweise das Laufrad einer Pumpe, eine Spindel oder sonst eine Vorrichtung angetrieben wird. Ist der Rotor eine Welle, so können beispielsweise zwei erfindungsgemässe Drehantriebe 1 vorgesehen sein und/oder es können zusätzliche magnetische Radial- und oder Axiallager vorgesehen sein.

## Patentansprüche

1. Elektromagnetischer Drehantrieb, ausgestaltet als lagerloser Motor, mit einem magnetisch gelagerten Rotor (3), wobei der Rotor (3) ein permanentmagnetisch erregter Rotor ist, und einem Stator (2), der eine Antriebswicklung zum Erzeugen eines magnetischen Antriebsdrehfelds umfasst, welches ein Drehmoment auf den Rotor (3) bewirkt, wobei die Antriebswicklung eine Polpaarzahl eins hat, und wobei der Stator (2) ferner eine Steuerwicklung zum Erzeugen eines magnetischen Steuerdrehfelds umfasst, mit welchem die Position des Rotors (3) bezüglich des Stators (2) regelbar ist, und wobei der Stator (2) genau sechs Statorzähne (21) aufweist mit mindestens je einer konzentrierten Spule (41a,42a,41b,42b,41c,42c,41u,42u,41v, 42v,41w,42w; 41-46) auf jedem Statorzahn (21), **dadurch gekennzeichnet, dass** eine Kontrollvorrichtung (6) Phasenströme für die Antriebswicklung ermittelt, derart dass jeweils drei benachbarte Statorzähne (21) einen magnetischen Nordpol des Antriebsdrehfelds bilden.

2. Drehantrieb nach Anspruch 1, bei welchem eine der beiden Wicklungen eine Polpaarzahl eins aufweist und die andere Wicklung eine Polpaarzahl zwei.

3. Drehantrieb nach einem der vorangehenden Ansprüche, bei welchem die Antriebswicklung dreiphasig ausgestaltet ist.

4. Drehantrieb nach einem der vorangehenden Ansprüche, bei welchem die Steuerwicklung dreiphasig ausgestaltet ist.

5. Drehantrieb nach einem der vorangehenden Ansprüche, bei welchem die Antriebswicklung und die Steuerwicklung als separate Wicklungen ausgestaltet sind.

6. Drehantrieb nach Anspruch 5, bei welchem die Antriebswicklung und die Steuerwicklung jeweils sechs konzentrierte Spulen (41u,42u,41v, 42v,41w,42w bzw. 41a,42a,41b,42b,41c,42c) umfassen, wobei um jeden Statorzahn (21) genau eine Spule der Antriebswicklung und genau eine Spule der Steuerwicklung gewickelt ist.

7. Drehantrieb nach einem der Ansprüche 5 oder 6, bei welchem die Spulen (41u,42u,41v,42v,41w,42w) der Antriebswicklung paarweise elektrisch in Serie verbunden sind und die Spulen (41a,42a,41b,42b,41c,42c) der Steuerwicklung paarweise elektrisch in Serie verbunden sind, wobei jeweils diejenigen Spulen paarweise verbundenen sind, die um diametral gegenüberliegende Statorzähne (21) gewickelt sind.

8. Drehantrieb nach Anspruch 7, wobei die paarweise verbundenen Spulen der einen Wicklung stets gegensinnig zueinander gewickelt sind und die paarweise verbundenen Spulen der anderen Wicklung stets gleichsinnig zueinander gewickelt sind.

9. Drehantrieb nach einem der Ansprüche 1-4, wobei auf jedem Statorzahn genau eine Spule (41-46) vorgesehen ist, jede Spule (41-46) separat und unabhängig von den anderen Spulen ansteuerbar ist, und wobei die Antriebswicklung mit denselben Spulen (41-46) realisiert ist wie die Steuerwicklung.

## Claims

1. Electromagnetic rotary drive, designed as bearingless motor, comprising a magnetically journalled rotor (3), wherein the rotor (3) is a permanent magnetically excited rotor, and a stator (2) which comprises a drive winding for producing a magnetic rotary drive field which produces a torque on the rotor (3), wherein the drive winding has a number of pole pairs equal to one, and wherein the stator (2) further comprises a control winding for producing a magnetic rotary control field by means of which the position of the rotor (3) with respect to the stator (2) can be regulated, and wherein the stator (2) has exactly six stator teeth (21) with at least one concentrated coil (41a, 42a, 41b, 42b, 41c, 42c, 41u, 42u, 41v, 42v, 41w, 42w; 41 - 46) each on each stator tooth (21), **characterized in that** a control device (6) determines phase currents for the drive winding in such a way that in each case three adjacent stator teeth (21) form a magnetic north pole of the rotary drive field.

2. Rotary drive in accordance with claim 1, in which one of the two windings has a number of pole pairs equal to one and the other winding has a number of pole pairs equal to two.

3. Rotary drive in accordance with any one of the preceding claims, in which the drive winding is designed to be three-phased.

4. Rotary drive in accordance with any one of the preceding claims, in which the control winding is designed to be three-phased.

5. Rotary drive in accordance with any one of the preceding claims, in which the drive winding and the control winding are designed as separate windings.

6. Rotary drive in accordance with claim 5, in which the drive winding and the control winding in each case comprise six concentrated coils (41u, 42u, 41v, 42v, 41w, 42w and, respectively, 41a, 42a, 41b, 42b, 41c, 42c), with exactly one coil of the drive winding and exactly one coil of the control winding being wound around each stator tooth (21).

7. Rotary drive in accordance with any one of the claims 5 or 6, in which the coils (41u, 42u, 41v, 42v, 41w, 42w) of the drive winding are electrically connected pair-wise in series and the coils (41a, 42a, 41b, 42b, 41c, 42c) of the control winding are electrically connected pair-wise in series, with in each case those coils which are wound around diametrically oppositely lying stator teeth (21) being pair-wise connected.

8. Rotary drive in accordance with claim 7, with the coils of the one winding which are connected pair-wise always being wound in mutually opposite senses and the coils of the other winding which are connected pair-wise always being wound in mutually the same sense.

9. Rotary drive in accordance with any one of the claims 1 to 4, with exactly one coil (41 - 46) being provided on each stator tooth, each coil (41 - 46) being controllable separately and independently of the other coils, and with the drive winding being realized with the same coils (41 - 46) as the control winding.

## Revendications

1. Un entraînement électromagnétique rotatif, conçu comme un moteur sans palier, avec un rotor (3) supporté magnétiquement, le rotor étant un rotor à excitation magnétique permanente, et avec un stator (2) comprenant un enroulement d'entraînement pour générer un champ d'entraînement magnétique rotatif, qui affecte un moment de rotation sur le rotor (3), dans lequel l'enroulement d'entraînement a un nombre de paires de pôles de l'un, et dans lequel le stator (2) comprend en outre un enroulement de commande pour générer un champ de commande magnétique rotatif, avec lequel la position du rotor (3) par rapport au stator (2) peut être commandée, et dans lequel le stator (2) a exactement six dents de stator (21) ayant chacune au moins une bobine concentrée (41a,42a,41b,42b,41c,42c,41u,42u,41v, 42v,41w,42w; 41-46) sur chaque dent de stator (21), **caractérisé en ce qu'**un dispositif de commande (6) détermine des courants de phase pour l'enroulement d'entraînement de telle manière que trois dents de stator adjacentes (21) forment chacune un pôle nord magnétique du champ tournant de l'entraînement.

2. Un entraînement rotatif selon la revendication 1, dans lequel l'un des deux enroulements a un nombre de paires de pôles de l'un et l'autre enroulement a un nombre de paires de pôles de deux.

3. Un entraînement rotatif selon l'une des revendications précédentes, dans lequel l'enroulement d'entraînement est triphasé.

4. Un entraînement rotatif selon l'une des revendications précédentes, dans lequel l'enroulement de commande est triphasé.

5. Un entraînement rotatif selon l'une des revendications précédentes, dans lequel l'enroulement d'entraînement et l'enroulement de commande sont conçus comme des enroulements séparés.

6. Un entraînement rotatif selon la revendication 5, dans lequel l'enroulement d'entraînement et l'enroulement de commande comprennent chacune six bobines concentrées (41u,42u,41v,42v,41w,42w et
41a,42a,41b,42b,41c,42c, respectivement), dans lequel exactement une bobine de l'enroulement d'entraînement et exactement une bobine de l'enroulement de commande est enroulée autour de chaque dent de stator (21).

7. Un entraînement rotatif selon l'une des revendications 5 ou 6, dans lequel les bobines (41u,42u,41v, 42v,41w, 42w) de l'enroulement d'entraînement sont reliées électriquement en série par paires et les bobines (41a,42a,41b,42b,41c,42c) de l'enroulement de commande sont reliées électriquement en série par paires, dans lequel chacune desdites bobines est reliée par paires, qui sont enroulées autour de dents de stator diamétralement opposées (21).

8. Un entraînement rotatif selon la revendication 7, dans lequel les bobines d'un enroulement, qui sont reliées par paires, sont toujours enroulées dans des directions opposées l'une à l'autre et les bobines de l'autre enroulement, qui sont reliées par paires, sont toujours enroulées dans la même direction l'une à l'autre.

9. Un entraînement rotatif selon l'une des revendications 1 à 4, dans lequel exactement une bobine (41-46) est prévue sur chaque dent du stator, chaque bobine (41-46) peut être commandée séparément et indépendamment des autres bobines, et dans lequel l'enroulement d'entraînement est réalisé avec les mêmes bobines (41-46) que l'enroulement de commande.
